# EUROPEAN PATENT APPLICATION

(11) **EP 1 743 911 A1**
(43) Date of publication of application: **17.01.2007**
(21) Application number: 05381037.0
(22) Date of filing: 14.07.2005
(51) Int. Cl.: C08G 18/10, C08G 18/12, C09D 11/10

(54) **Polyurethane composition**

(71) Applicant: DSM IP Assets B.V., 6411 TE Heerlen (NL)
(72) Inventor: Parra, Esther, DSM IP Assets B. V., 08150 Parets del Valles (ES); Tiana, Joan, DSM IP Assets B.V., 08150 Parets del Valles (ES); Frieden, Urs, DSM IP Assets B. V., 08150 Parets del Valles (ES)
(74) Representative: Elzaburu Marquez, Alberto

(57) **Abstract**

A polyurethane composition comprising at least:
I) 20 to 60 wt% of a polyurethane having an Mp in the range of from 10,000 to 32,000 g/mol and a PDi in the range of from 1.3 to 10; and
II) 80 to 40 wt% of a liquid medium.

## Description

The invention relates to a polyurethane composition, processes for preparing the polyurethane composition and an ink, in particular a printing ink comprising the polyurethane composition for use in a laminate.

Laminates are multi-layered composites where each layer consists of the same or different materials. In the field of flexible packaging, laminates usually comprise plastic and/or metallised films. Flexible packaging is used for example in the food industry and has many requirements such as for example eliminating or limiting the transfer of moisture, oxygen, oils and flavours; flexible packaging used for microwave cooking needs to protect the contents during storage but also needs to have good heat resistance; flexible packaging used for beverages needs to have good cold resistance and handling resistance; flexible packaging used in other applications may also need to be resistant to the transfer to perfumes, resistant to surfactants, resistant to oil/water mixtures, and additionally the flexible packaging should be easy to open when required.

Generally laminates are produced by joining two or more layers using adhesives or by carrying out adhesive-free extrusion coating. Additionally it is often desirable to apply an image to one or more of the layers during the lamination process.

For example, if using en adhesive laminating method an image may be printed onto a plastic film substrate, after which an adhesive is applied to the inked substrate, followed by applying a second film to the adhesive (the adhesive could also be applied to the second film). If using an extrusion coating / laminating method an image may be printed onto a plastic film substrate, optionally followed by the application of a primer and then a molten resin is extruded onto the inked substrate to form a second layer followed by the formation of a bond between the two substrates. It is therefore desirable that laminating inks possess excellent adhesion to the printing substrate as well as to the film adhesive and/or film to be laminated.

Laminated films, when used to make packaging, often undergo heat sealing and when used as food packaging must be able to undergo a boiling or retorting treatment for cooking or sterilising the contents. It is therefore also desirable that delamination does not occur during such processes.

The properties of a laminate therefore depend on the type of films used, the laminating process, the type of adhesive and the ink properties and in particular the properties of any resins used as binders in the ink.

The types of films that are used in flexible packaging laminates include, among others polyester, cellophane, polypropylene, polyethylene, aluminium foils, nylon and paper. Such films may also have been functionalised through a range of chemical and physical treatments.

A range of binders have been used in laminating inks such as modified PVC (polyvinyl chloride), polyvinyl butyral, polyamides, polyesters, nitrocellulose and polyurethanes. However it has been found that some binders are incompatible, difficult to clean up from ink printing equipment and many only adhere to certain substrates and even if the binders do adhere, they may be poor in their resistance lo boiling or retorting treatments and generally do not achieve desirable bond strength. In addition there is an increase in demand for high line speed printing, especially at line speeds greater than 200 m/min or even greater than 300 m/min. However, at such line speeds printability problems such as cob-webbing may occur for flexo printing and scumming may appear for gravure printing processes. One cause of such problems is the limited re-solubility of the binders used in the inks in the typical solvents used in these applications. Although the use of solvents such as ketones or solvents with a slower evaporation rate may be used to solve some of the problems, these solvents have other inherent issues such as safety and environmental issues as well as being slow to dry which can result in the solvent migrating into the packed material. Therefore the use of solvents with a faster evaporation rate is useful, although if they are too fast then printability failures may also occur.

There are also concems with chlorine being given of during the incineration of packaging printed with polyvinyl chloride based inks and polyvinyl butyral based inks are associated with printing difficulties.

A method for overcoming such problems is to use a combination of binders where binders may be chosen to suit particular films and adhesives. However a disadvantage with such an approach is that a large number of binders need to be prepared and stored for all the different types of inks that may be applied lo the laminate films. Additionally if the various inks are not compatible with each other then extensive cleaning of the printing equipment would be required for each change over.

Traditional tow molecular weight polyurethanes may give good printability but only have a limited application for laminates and usually require blending with al least a second harder binder to achieve a good balance in properties.

Elastomeric higher molecular weight polyurethanes are widely used in laminating and can give a good balance in properties however they have reduced printability especially in high speed printing processes.

Laminating inks using polyurethanes as a binder are well known in the art.

EP 604890 B1 discloses a printing ink composition for a laminate comprising a polyurethane resin where the polyurethane is prepared with a low and a high molecular weight polyol. WO 02/38643 discloses solvent based polyurethane (urea) resins suitable for laminating printing inks where the polyurethane prepolymer is derived from a diol and a low molecular weight polyol. WO 01/14442 discloses polyurethanes for formulating printing ink compositions obtained by preparing an isocyanate-terminated prepolymer which is then reacted with a diamine.

EP 1229090 A1 discloses a polyurethane resin, which can be used as a binder in a printing ink for making laminates where the polyurethane is prepared with at least three polyols within different molecular weight ranges.

A disadvantage of such polyurethanes is that they often still require combining with other binders such as for example nitrocellulose to get a good balance of properties such as for example adhesion, block resistance, flexibility, solvent retention, chemical resistances and resistance to sterilisation. Furthermore the prior art does not describe a polyurethane binder that provides a good bond strength whilst maintaining printability at high lino speeds.

Surprisingly we have found that it is possible to prepare polyurethane binders that overcome many of the disadvantages of the prior art systems with a polyurethane system which is suitable for *inter alia flexo* and gravure printing processes on a broad range of substrates used in flexible packaging film laminates and which are suitable for extrusion lamination.

According to the present invention there is provided a polyurethane composition comprising at least:
I) 20 to 60 wt% of a polyurethane having an Mp in the range of from 10,000 to 32,000 g/mol and a PDi in the range of from 1.3 to 10; and
II) 80 to 40 wt% of a liquid medium.

The Mp is the molecular weight with the highest signal (i.e. the apex of the peak) in a chromatogram resulting from the measuring of the molecular weight using Gel Permeation Chromatography (GPC) with polystyrene as a standard and tetrahydrofuran as an eluent, Mp values are discussed in Modem Size Exclusion Liquid Chromatography, W.W. Yau, J.K. Kirkland and D.D. Bly, John Wiley & Sons, USA, 1997.

Preferably the Mp is in the range of from 13,000 to 32,000, more preferably 17,000 to 31,000 and most preferably 19,000 to 30,000.

The polydispersity index (PDi) is defined as the weight average molecular weight (Mw) divided by the number average molecular weight (Mn).

Preferably the PDi is in the range of from 1.3 to 6, more preferably 1.3 lo 4 and especially 1.6 to 3.0.

Preferably II) the liquid medium comprises ≤ 20 wt% of water, more preferably ≤ 6 wt% and most preferably ≤ 1 wt% of water. Preferably the liquid medium comprises ≥ 75 wt%, more preferably ≥ 90 wt%, most preferably ≥ 98 wt% and especially 100 wt% of solvents having a molecular weight ≤ 105 g/mol. Examples of such solvents include alcohols (ethanol, isopropanol, n-butanol, n-propanol), esters (ethyl acetate, propyl acetate), aromatic solvents (toluene), ketone solvents (acetone, methyl ethyl ketone, methyl isobutyl ketone) and mixtures thereof. Most preferably the liquid medium comprises a solvent selected from the group comprising ethanol, isopropanol, ethylacetate and or a mixture thereof.

The polyurethane of the invention composition also Preferably has a viscosity ≤ 18,000 mPa.s, more preferably ≤ 12,000 mPa.s and most preferably ≤ 6,000 mPa.s at any solids content in the range of from 20 to 60 wt%, in a solvent comprising ≥ 70 wt%, more preferably ≥ 90 wt% and most preferably 100 wt% of at least one solvent having a molecular weight ≤ 105 g/mol. All viscosities are measured according lo ISO 2555-1989 at 25°C.

Preferably the solids content of the composition is at least 40%, more preferably at least 45%, most preferably at least 50% and especially at least 53%.

Preferred solvents used lo measure the viscosity of the polyurethane in, include ethanol, isopropanol, n-propanol, ethyl acetate, propyl acetate and or mixtures thereof.

In an embodiment of the invention the polyurethane of the invention composition has a polymodal molecular weight distribution where 15 to 85 wt% of the polyurethane has a weight average molecular weight (Mw) at least 10,000 g/mol greater than the weight average molecular weight (Mw) of the remaining 85 to 15 wt% of the polyurethane. In case of a polymodal Mw distribution, the Mp is calculated on the total molecular weight of the polyurethane of the invention.

Preferably the polyurethane of the invention has a polymodal molecular weight distribution where (a) 85 lo 15 wt% of the polyurethane has a weight average molecular weight in the range of from 4,000g/mol up to 25,000g/mol; and (b) 15 lo 85 wt% of the polyurethane has a weight average molecular weight in the range of from 25,000g/mol to 100,000g/mol with the proviso that 35 lo 70 wt% of the polyurethane has a weight average molecular weight of at least 5,000 g/mol, more preferably 10,000g/mol greater than the weight average molecular weight of 20 lo 50 wt% of the polyurethane.

Polyurethanes with a polymodal molecular weight distribution may be obtained by blending individual polyurethanes or polyurethanes with a polymodal molecular weight distribution may be obtained by an in-situ process. Preferably polyurethanes with a polymodal molecular weight distribution are obtained by an in-situ process.

The polyurethane of the invention composition is preferably obtained by reacting component comprising
(i) 2 to 50 wt% of at least one polyisocyanate;
(ii) 0 to 20 wt% of at least one isocyanate-reactive polyol with a weight-average molecular weight in the range of from 50 lo 200glmol;
(iii) 0 to 95 wt% of at least one isocyanate-reactive polyol with a weight-average molecular weight in the range of from 201 lo 20,000 g/mol;
(iv) 0 to 95 wt% of an isocyanate-reactive polyol not comprised by (ii) or (iii);
(v) 0.2 lo 40 wt% of a chain-extending and/or chain-terminating component not comprised by (i), (ii), (iii) or (iv);

where (i), (ii), (iii), (iv) and (v) add up lo 100%.

The polyisocyanate component (i) may be an aliphatic polyisocyanate, an aromatic isocyanate or mixtures thereof.

The term aromatic polyisocyanate (for the cake of clarity) is intended to mean compounds in which all the isocyanate groups are directly bonded to an aromatic group, irrespective of whether aliphatic groups are also present. Examples of suitable aromatic polyisocyanates include but are not limited to p-xylylene diisocyanate, 1,4-phenylene diisocyanate, 2,4-toluene diisocyanate, 2,6-toluene diisocyanate, 4,4'-methylene bis(phenyl isocyanate), polymethylene polyphenyl polyisocyanates, 2,4'-methylene bis(phenyl isocyanate) and 1,5-naphthylene diisocyanate, Preferred aromatic isocyanates include 2,4'-methylene bis(phenyl isocyanate) and 4,4'-methylene bis(phenyl isocyanate). Aromatic polyisocyanates provide chemical resistance and toughness but may yellow un exposure to UV light.

The term aliphatic polyisocyanate (for the sake of clarity) is intended to mean compounds in which all the isocyanate groups are directly bonded te aliphatic or cycloaliphatic groups, irrespective of whether aromatic groups are also present.

Examples include but are not limited to ethylene diisocyanate, para-tetra methylxylene diisocyanate (p-TMXDI), meta-tetra methylxylene diisocyanate (m-TMXDI), 1,6-hexamethylene diisocyanate, isophorone diisocyanate (IPDI), cyclohexane-1,4-diisocyanate and 4,4'-dicyclohexylmethane diisocyanate. Aliphatic polyisocyanates improve hydrolytic stability, resist UV degradation and do not yellow. Preferred aliphatic iscocyanates include isophorone diisocyanate, 4,4'-dicyclohexylmethane diisocyanate and 1,6-hexamethylene diisocyanate.

Preferably at least 70 wt%, more preferably at least 85 wt% and most preferably at least 95 wt°/a of the polyisocyanate in component (i) has two isocyanate groups.

Aromatic or aliphatic polyisocyanates which have been modified by the introduction of, for example, urethane, allophanate, urea, biuret, uretonimine and urethdione or isocyanurate residues may be uses for component (i).

Preferably the polyurethane comprises 4 to 30 wt% and more preferably 10 to 20 wt% of component (i).

The isocyanate-reactive components (ii) to (iv) will normally consist of a polyol component bearing isocyanate-reactive groups which may also bear other reactive groups. By a polyol component it is also meant to include compounds with one or more isocyanate-reactive groups such as -OH, -SH, -NH- and - NH₂.

Examples of component (ii) include but are not limited to 1,4-cyclohexyldimethanol, ethylene glycol, propylene glycol, diethylene glycol, neopentyl glycol, 1,4-butanediol, 1,6-hexanediol, furan dimethanol, cyclohexane dimethanol, glycerol, trimethylolpropan, dimethylol propanoic acid (DMPA) and dimethylol butanoic acid (DMBA).

Preferably component (ii) has an average of 1.8 to 2.5 isocyanate-reactive groups and more preferably component (ii) has two hydroxy functional groups.

Preferably the weight average molecular weight of component (ii) is in the range of from 62 to 200 and more preferably 84 to 200 glmol.

Preferably the polyurethane comprises 0 to 5 wt°lo and more preferably 0 to 3 wt% of component (ii).

Examples of component (iii) and (iv) include but are not limited to polyols such as polypropylene glycols,poly(propylene oxide/ethylene oxide) copolymers, poiytetrahydrofuran, polybutadiene, hydrogenated polybutadiene, polysiloxane, polyamide polyesters, isocyanate-reactive polyoxyethylene compounds, polyester, polyether, polycaprolactone, polythioether, polycarbonate, polyethercarbonate, polyacetal and polyolefin polyols. Generally polyester polyols provide good weathering, good adhesion, improved chemical resistance and toughness; polyether polyols provide good flexibility, elasticity and storage stability; polycaprolactone polyols provide improved weathering and better heat resistance than polyether polyols and better water resistance than adipate polyester polyols.

Polyester amides may be obtained by the inclusion of amino-alcohols such as ethanolamine in polyesterification mixtures. Polyesters which incorporate carboxy groups may be used, for example polyesters where DMPA and/or DMBA are used during the synthesis.

Polyether polyols which may be used include products obtained by the polymerisation of a cyclic oxide, for example ethylene oxide, propylene oxide or tetrahydrofuran or by the addition of one or more such oxides to polyfunctional initiators, for example water, methylene glycol, ethylene glycol, propylene glycol, dethylene glycol, cyclohexane dimethanol, glycerol, trimethylopropane, pentaerythritol or Bisphenol A. Especially useful polyether polyols include polyoxypropylene diols and triols, poly (oxyethytene-oxypropylene) diols and triols obtained by the simultaneous or sequential addition of ethylene and propylene oxides to appropriate initiators and polytetramethylene ether glycols obtained by the polymerisation of tetrahydrofuran. Particularly preferred are polypropylene glycols.

Preferably the weight average molecular weight of component (iii) is in the range of from 500 to 11,000 g/mol, more preferably 600 to 6,000 g/mol and especially 700 to 5,000 g/mol,

Components (iii) and (iv) may also include crosslinking groups. Crosslinking groups are well known in the art and include groups which crosslink at ambient temperature (20 ± 3°C) or at elevated temperatures by a number of mechanisms including but not limited to Schiff base crosslinking (for example the reaction of carbonyl functional groups with carbonyl reactive amine and/or hydrazine functional groups); silane crosslinking (for example the reaction of alkoxy silane groups in the presence of water) and epoxy groups crosslinking with epoxy-reactive functional groups or isocyanate curing, where hydroxy or amine (primary or secondary) functional polyurethanes are combined with polyisocyanates. Usually the polyisocyanates are added shortly before application. Altematively, blocked polyisocyanetes are used which deblock at elevated temperature after application. Isocyanate crosslinking is most preferred, when crosslinking is applied during the application process.

Preferably the polyurethane comprises 20 to 95 wt% and more preferably 60 to 90 wt% and especially 70 to 89 wt% of component (iii).

Preferably the polyurethane comprises 0 to 6 wt% and more preferably 0 to 3 wt% and most preferably 0 wt% of component (iv).

Component (v) comprises a chain-extending and/or chain-terminating component.

Examples of chain-terminating compounds include mono-alcohols, amino-alcohols, primary or secondary amines and mono-functional hydrazines as are well known in the art. Di- or poly- functional isocyanante-reactive compounds may be used as a chain-terminating compound if only one isocyanante-reactive group reacts under the given conditions. Examples of such difunctional compounds include monoethanol amine. The chain-terminating compound may also be a mono-functional isocyanate.

Examples of chain-extending compounds include amino-alcohols, primary or secondary diamines or polyamines such as ethylene diamine, propylene diamine and cyclic amines such as isophorone diamine and 4,4'-dicyclohexylmethane diamine; hydrazine and substituted hydrazines such as, for example, dimethyl hydrazine, 1,6 hexamethylene-bis-hydrazine, carbodihydrazine, hydrazides of dicarboxylic acids and sulphonic acids such as adipic acid dihydrazide, oxalic acid dihydrazide, isophthalic acid dihydrazide, hydrazides made by reacting lactones with hydrazine, bis-semi-carbazide, and bis-hydrazide carbonic esters of glycols; azines such as acetone azine, and or mixtures thereof. Another suitable class of chain-extending compounds are the so-called "Jeffamine" compounds with a functionality of 2 or 3 (available from Huntsman). These are PPO or PEO-based di or triamines, e.g. "Jeffamino" T403 and "Jeffamine" D-400. In a special embodiment where the prepolymer has isocyanate-reactive functional groups (such as hydroxyl groups) a chain-extending compound may also be a difunctional isocyanate.

Preferably the polyurethane comprises 0.5 to 40 wt%, more preferably 0.7 to 25 wt%, especially 1 to 10 wt% and most especially 3 to 6 wt% of component (v).

The polyurethane of the invention composition may be prepared conventionally by reacting a stoichiometric excess of the organic polyisocyanate (component (i)) with the isocyanate-reactive compounds (components (ii), (iii) and (iv)) under substantially anhydrous conditions at a temperature between about 30°C and about 130°C, more preferably about 45°C to about 85°C until reaction between the isocyanate groups and the isocyanate-reactive groups is substantially complete to form an isocyanate-terminated prepolymer; preferably the reactants for the prepolymer are generally used in proportions corresponding to a ratio of isocyanate groups to isocyanate-reactive groups of from about 1.2:1 to about 2:1, more preferably from about 1.3:1 to 2.0:1 and most preferably 1.45:1 to 2:1. If desired, catalysts such as dibutyltin dilaurate and stannous octoate, zirconium or titanium based catalysts may be used to assist the polyurethane formation. Optionally no catalyst is added. Preferably no tin based catalyst is added. The catalyst, if used may be added immediately to a mixture of components (i) to (iv) or the mixture of components (i) to (iv) may be allowed to react for a period of time before the addition of a catalyst.

The reaction is usually carried out in the presence of an organic solvent to control the viscosity. Suitable organic solvents include but are not limited to acetone, tetrahydrofuran, ethyl ecetate, methyl ethyl ketone, methyl isobutyl ketone and ather solvents well known in the art.

If an isocyanate-terminated prepolymer is formed it is then reacted with a chain-extending and/or chain-terminating component (v). Alternately a hydroxyl-terminated prepolymer may be formed which is then reacted with a chain-extending and/or chain-terminating component (v).

The reaction between the components may be carried out In any order.

The polyurethane of the invention composition may comprise one or more than one polyurethane. If there is more than one polyurethane, they may be combined by blending two or more polyurethanes and or by preparing one polyurethane in the presence of another. Preferably one polyurethane is prepared in the presence of another which is also known as en in-situ preparation.

For example if the polyurethane has a polymodal distribution as described above then the polyurethane with a weight-average molecular weight in the range of from 5,000 up to 25,000 g/mol may be prepared in the presence of the polyurethane with a weight-average molecular weight in the range of from 25,000 to 100,000 g/mol or the polyurethane with a weight-average molecular weight in the range of from 25,000 to 100,000 g/mol may be prepared in the presence of the polyurethane with a weight-average molecular weight in the range of from 5,000 up to 25,000 g/mol.

The polyurethane of the invention composition may be prepared by a number of processes.

In one embodiment of the invention the polyurethane is obtained by a process comprising the following steps:
I) preparing an isocyanate-terminated prepolymer;
II) reacting the isocyanate groups of isocyanate-terminated prepolymer with 0.2 to 0.6 stoichiometric equivalents of at least one active-hydrogen containing chain-terminating compound;
III) reacting the isocyanate groups of the isocyanate-terminated prepolymer obtained in step II with 0.1 to 1,2 stoichiometric equivalents to at least one active-hydrogen containing chain-extending compound;
where optionally steps II and III may be repeated,

In another embodiment the polyurethane is obtained by a process comprising the following steps:
I) preparing en isocyanate-terminated prepolymer A;
II) reacting the isocyanate groups of isocyanate-terminated prepolymer A with 0.2 to 1.0 stoichiometric equivalents of at least one active-hydrogen chain-terminating compound;
III) reacting the isocyanate groups of the isocyanate-terminated prepolymer obtained in step II with 0 to 1.0 stoichiometric equivalents of at least one active-hydrogen chain-extending compound;
IV) introducing an isocyanate-terminated prepolymer B ;
V) reacting the isocyanate groups obtained from steps III and IV with 0 to 1.0 stoichiometric equivalents of at least one active-hydrogen chain-terminating compound;
VI) reacting the isocyanate groups obtained from step V, with 0.1 to 1.2 stoichiomctric equivalents of at least one active-hydrogen chain-extending compound;
where optionally steps V and VI may be repeated.

Isocyanate-terminated prepolymer B may be prepared and then blended with the prepolymer obtained in step III or isocyanate-terminated prepolymer B may be prepared in the presence of the prepolymer obtained in step III.

In a further embodiment the polyurethane is obtained by a process comprising the following steps:
I) preparing an isocyanate-terminated prepolymer A ;
II) reacting the isocyanate groups of isocyanate-terminated prepolymer A with 0 to 0.6 stoichiometric equivalents of at least one active-hydrogen chain-terminating compound;
III) reacting the isocyanate groups of the isocyanate-terminated prepolymer obtained in step II with 0.1 to 1.2 stoichiometric equivalents at least one active-hydrogen chain-extending compound;
IV) optionally reacting any remaining isocyanate groups of the isocyanate-terminated prepolymer obtained in step III with at least one active-hydrogen chain-terminating compound;
V) introducing an isocyanate-terminated prepolymer B;
VI) reacting the isocyanate groups of the prepolymer obtained in step IV and step V with 0 to 0.6 stoichiometric equivalents of *at least one* active-hydrogen chain-terminating compound;
VI) reacting the isocyanate groups obtained in step VI with 0,1 to 1.0 stoichiometric equivalents of at least one active-hydrogen chain-extending compound;
where optionally steps VI and VII may be repeated.

Preferably the final steps in each process embodiment are repeated until the isocyanate group content is ≤ 1 wt% more preferably ≤ 0.5 wt% and more preferably 0.01 wt% and is most preferably so low that the isocyanate group content is no longer detectable using methods well known in the art.

Preferably the isocyanate-terminated prepolymer in step I has an isocyanate group content in the range of from 0.5 to 5.5 wt%, more preferably 0.5 to 4.5 wt% and most preferably 0.5 to 3.5 wt%.

Preferably in step II the isocyanate groups of the isocyanate-terminated prepolymer are reacted with 0.1 to 0.55, more preferably 0.18 te 0.45 and most preferably 0.2 to 0.42 stoichiometric equivalents of at least one active-hydrogen chain-terminating compound.

Preferably in step III of the isocyanate groups remaining after step II are reacted with 0.5 to 1.0, more preferably 0.6 to 0.98 and most preferably 0.7 to 0.95 steichiometric equivalents of at least one active-hydrogen chain-extending compound.

After obtaining the polyurethane some or all of the organic solvent may be removed or further organic solvent may be added to give a polyurethane solution with a solids content in the range of from 10 to 90 wt%, preferably 35 to 75 wt%, more preferably 42 to 85 wt% and most preferably 49 to 60 wt%.

The final polyurethane has good adhesion, printability, solubility in solvents and good bond strength.

The resultant polyurethane may be used directly as a binder for packaging inks or in combination with, for example, fillers, waxes, thickeners, co-resins and/or colorants.

In en embodiment of the present invention there is provided an ink comprising:
(A) a polyurethane composition according to the invention;
(B) a colorant; and
(C) optionally en additional organic solvent.

The ink preferably has a viscosity in the range of from 50 to 1,000, more preferably 100 to 500 mPa.s at 20° C.

Preferably the ink comprises 0.1 to 50 wt%, more preferably 0.5 to 40 wt% and most preferably 1.0 to 30 wt% of (A), the polyurethane.

Preferably the ink comprises 1 to 50 wt%, more preferably 3 to 40 wt% and most preferably 8 to 40 wt% of (b), the colorant.

Colorants include dyes, pigments or mixtures thereof. The pigment may be any conventional organic or inorganic pigment such as titanium dioxide, carbon black or any coloured pigments well known in the art.

The dyes may be any conventional dyes selected from acid dyes, natural dyes, cationic or anionic direct dyes, basic dyes and reactive dyes.

Preferably the ink comprises 10 to 80 wt%, more preferably 20 to 80 wt% and most preferably 40 to 80 wt% of (C), the organic solvent.

The organic solvent (C) may be one solvent or a mixture of solvents. Preferred organic solvents include methanol, ethanol, n-propanol, isopropanol, butanol, (ail Isomers), cyclohexanol; acetone, methyl ether ketone, cyclohexanone, diacetone alcohol; tetrahydrofuran, dioxane; aliphatic hydrocarbons; esters, preferably ethyl acetate; chlorinated hydrocarbons, preferably CH₂Cl₂; ethers, preferably diethyl ether; and mixtures thereof.

Inks comprising a fast evaporating organic solvent (C), (i.e. solvents with a molecular weight ≤ 100 g/mol), are particularly useful where fast drying times are required, especially when printing unto hydrophobic and non-absorbent substrates, for example plastics, metal and glass.

Optionally the ink may also contain other ingredients used in inks, for example defoamers, antioxidants, corrosion inhibitors, bacteriocides and viscosity modifiers.

The ink may be used in a number of printing processes including flexographic and/or gravure printing processes.

In a further embodiment of the present invention there is provided a process for printing an image on a substrate comprising applying thereto an ink containing a polyurethane according to the present invention.

Preferably the printing process is a flexographic and/or gravure printing process.

The invention will now be described by example only. All parts and percentages are by weight unless specified otherwise.

### Example 1

Step I: A four-necked reaction vessel with an agitator, a thermometer, a condenser and a gas introduction pipe was charged with melted 4,4'-diphenylmethane diisocyanate (141.6 g) and isophorone diisocyanate (36.7 g). After mixing until homogeneity, polypropylene glycol (725.8 g, Mw 4000) and 1,3-butylenegiycol (16.1 g) were added to the reaction vessel. The temperature was increased to 70°C and held for 120 minutes while introducing nitrogen gas. The resultant NCO % was 3.3 %.
Step II: Ethanol (6.6 g) was added to chain-terminate part of the prepolymer. The temperature was maintained at 65°C for 30 minutes. The resultant NCO% was 2.6 %. While cooling the reaction mixture, ethyl acetate (303.7 g) was added to uniformly dissolve the reaction mixture.
Step III: Isophorone diamine (41,3g) in ethanol (523,6 g) was added to the reaction vessel. The reaction was continued until the final NCO % was below the limit of detection (0.1 %). Subsequently ethanol was added to adjust the solids content of the resultant polyurethane to 54.0 wt%.

The Mp of the resultant polyurethane was 29,330 g/mol, the PDi was 2.4 and 20 wt% of the resultant polyurethane had a Mw of 9,500 and 80 wt% of the resultant polyurethane had a Mw of 30,000. The viscosity of the resultant polyurethane composition was 2,500 mPa.s when measured with a Brookfield LVT viscometer at 60 rpm, spindle 4 and at 25°C.

### Tests:

### 1) Adhesion:

A self adhesive tape (10 cm, type 683 of 3M) was applied under uniform pressure onto a printed ink layer on a substrate immediately after drying of the layer and torn off the substrato immediately thereafter. The quantity of the print adhered to the tape was classified with a scale from 0 to 5, where 0 means more than 95 % of the printed layer adhered to the tape, 1 means more than 50 % of the layer adhered to the tape, 2 means less than 30 %, of the printed layer adhered lo the tape, 3 means less than 20 % of the printed layer adhered to the tape, 4 means less then 10% of the printed layer adhered lo the tape and 5 means less than 2 % of the printed film adhered to the tape.

Substrates that may be used for this test are:
MB 400, co-extruded bioriented polypropylene (Mobil)
MB 200, co-extruded bioriented polypropylene plain biaxially oriented (Mobil) Terphane
10.10/1200, polyester, corona treated (Toray Plastic)
Melinex 813, polyester treated (Du Pont)
OPA, polyamide (Du Pont)

Universal adhesion means an adhesion score of at least 4 on at feast 4 of the above 5 mentioned films, and more preferably an adhesion score of at least 4 on all 5 of the above mentioned films.

### 2) Printability:

Printability is related lo the solubility of the polyurethane in organic solvents such as alcohol and ester solvents or mixtures thereof. Printability may be illustrated by curves of viscosity versus solids of the products in a mixture of ethanol and ethyl acetate (8:2 ratio and 2:8 ratio)

Printability may also be based on tests on a commercial printer (preferably at both medium and high speed).

### 3) Block-resistance:

A OPP film printed with an ink layer was overlapped onto an unprinted OPP film which had been subjected to a corona-discharging treatment so that the printed and therefore inked surface of the former was brought into contact with the surface of the latter. The resulting assembly was allowed to stand under a load of 3 kg)cm² at 40°C for one day.

The unprinted OPP film was peeled off from the printed OPP film and the degree lo which the ink film was transferred to the unprinted surface was observed and given a scale of 1 lo 4:
4 means the unprinted OPP film was smoothly peeled off and none of the ink film was transferred thereto.
3 means the unprinted OPP film was not smoothly peeled off but none of the ink film was transferred thereto.
2 means that less than 50 % of the ink film was transferred.
1 means that 50 to 100 % of the ink film was transferred.

### 4) Bondstrength:

The lamination/delamination test consisted of measuring the bond strength of a layer of printing ink bonded with an adhesive between two plastic films. First the ink was printed on to a primary substrate e.g.: PET, OPP, OPA. The secondary substrate or counter substrate was a low density polyethylene film. A print of a) white ink as the only layer between the two plastic films and b) a superposition of a layer of blue and white ink between the two films was tested. The technique for the production of the laminate was a standard adhesive based lamination technique using either a solvent based two-component polyurethane adhesive or a solvent free two-component polyurethane adhesive.

The bond strength is expressed as a combination of a number and a letter. The number value stands for the Newtons needed to separate the laminate of a width of 15 mm at a dynamometer speed of 200 mm/min. The higher the value the better the bond strength. The letter indicates the type of breakage with regard to the layer of the printed ink.

### 5) Heat resistance:

Heat resistance was tested with a heat-sealing machine, Otto Brugger HSG/ETK. An area of a printed substrate in contact with aluminium foil was placed between the heat sea jaws previously preset lo a temperature at least 160°C after which the temperature was increased step by stop to 180°C and then to 240°C. A dwell time of 1 second at a pressure of 3 bars/cm² was applied. After cooling the print and the foil were pulled apart and examined for ink pick off and ink transfer on to the foil. There should be no ink transfer from the print to the foil.

### 6) High-speed printing:

High-speed printing is defined as more than 250 m/min for gravure process and more than 350 m/min for flexo process printing.

## Claims

1. A polyurethane composition comprising at least:
I) 20 to 60 wt% of a polyurethane having an Mp in the range of from 10,000 to 32,000 g/mol and a Pbi in the range of from 1.3 to 10; and
II) 80 to 40 wt% of a liquid medium.

2. A polyurethane composition according to claim 1 where the polyurethane has a polymodal molecular weight distribution where 15 to 85 wt% of the polyurethane has a Mw at least 10,000 g/mol greater than the remaining 85 to 15 wt% wt% of the polyurethane.

3. A polyurethane composition according to claim 1 where the polyurethane has a polymodal molecular weight distribution where
(a) 85 to 15 wt% of the polyurethane has a Mw in the range of from 4,000 g/mol up to 25,000 g/mol; and
(b) 15 to 85 wt% of the polyurethane has a Mw in the range of from 25,000 g/mol to 100,000 g/mol; with the proviso that 35 to 75 wt% of the polyurethane has a Mw of at least 5,000 g/mol greater than the Mw of 20 to 50 wt% of the polyurethane.

4. A polyurethane composition according to any one of the preceding claims where the polyurethane is obtained by the reaction of components comprising:
(i) 2 to 50 wt% of at least one polyisocyanate;
(ii) 0 to 20 wt% of at least one isocyanate-reactive polyol with a weight-average molecular weight in the range of from 50 to 200 g/mol,
(iii) 0 to 95 wt% of at least one isocyanate-reactive polyol with a weight-average molecular weight in the range of from 201 to 20,000 g/mol;
(iv) 0 to 95 wt% of an isocyanate-reactive polyol not comprised by (ii) or (iii);
(v) 0.2 to 40wt% of a chain-extending and/or chain-terminating component not comprised by (i), (ii), (iii) or (iv).
where (i), (ii), (iii), (iv) and (v) add up to 100%.

5. A process for obtaining a polyurethane composition according to any one of the preceding claims camprising the following steps:
I) preparing an isocyanate-terminated prepolymer;
II) reacting the isocyanate groups of isocyanate-terminated prepolymer with 0,2 to 0.6 stoichiometric equivalents of at least one active-hydrogen containing chain-terminating compound;
III) reacting the isocyanate groups of the isocyanate-terminated prepolymer obtained in step II with 0.1 to 1.2 stoichiometric equivalents to at least one active-hydrogen containing chain-extending compound;
where optionally steps II and III may be repeated.

6. A process for obtaining a polyurethane composition according to any one of claims 1 to 4 comprising the following steps:
I) preparing an isocyanate-terminated prepolymer A;
II) reacting the isocyanate groups of isocyanate-terminated prepolymer A with 0.2 to 1.0 stoichiometric equivalents of at least one active-hydrogen chain terminating compound;
III) reacting the isocyanate groups of the isocyanate-terminated prepolymer obtained in step II with 0 to 1.0 stoichiometric equivalents of at least one active-hydrogen chain-extending compound;
IV) introducing an isocyanate-terminated prepolymer B;
V) reacting the isocyanate groups obtained from steps III and IV with 0 to 1.0 stoichiometric equivalents of at least one active-hydrogen chain-terminating compound;
VI) reacting the isocyanate groups obtained from step V with 0.1 to 1.2 stoichiometric equivalents of at least one active-hydrogen chain-extending compound;
where optionally steps V and VI may be repeated.

7. A process for obtaining a polyurethane composition according to any one of claims 1 to 4 comprising the following steps;
I) preparing an isocyanate-terminated prepolymer A ;
II) reacting the isocyanate groups of isocyanate-terminated prepolymer A with 0 to 0.6 stoichiometric equivalents of at least one active-hydrogen chain terminating compound;
III) reacting the isocyanate groups of the isocyanate-terminated prepolymer obtained in step II with 0.1 to 1.2 stoichiometric equivalents at least one active-hydrogen chain-extending compound;
IV) optionally reacting any remaining isocyanate groups of the isocyanate-terminated prepolymer obtained in step 111 with at least one active-hydrogen chain-terminating compound;
V) introducing an isocyanate-terminated prepolymer B;
VI) reacting the isocyanate groups of the prepolymer obtained in step IV and step V with 0 to 0.6 stoichiometric equivalents of at least one active-hydrogen chain-terminating compound;
VII) reacting the isocyanate groups obtained in step VI with 0.1 to 1.0 stoichiometric equivalents of at least one active-hydrogen chain-extending compound;
where optionally steps VI and VII may be repeated.

8. An ink comprinsg
(A) a polyurethane composition according to any one of claims 1 to 4;
(B) a colorant; and
(C) optionally an additional organic solvent

9. A process for printing an image on a substrate comprising applying an ink according to claim 8 to the substrate.

10. A laminate comprising a substrate printed with an ink according to claim 8.
